# EUROPEAN PATENT SPECIFICATION

(11) **EP 1 919 166 B1**
(45) Date of publication and mention of the grant of the patent: **14.03.2012**
(21) Application number: 07117543.4
(22) Date of filing: 28.09.2007
(51) Int. Cl.: H04L 29/08, H04W 4/08, H04W 4/18, H04W 16/00, H04W 84/00, H04W 8/18, H04L 12/56, H04W 84/18, H04W 40/24

(54) **Systems and methods for optimizing the topology of a Bluetooth scatternet for social networking**
System und Verfahren zur Optimierung der Topologie eines Bluetooth-Scatternets zur sozialen Kommunikation
Systèmes et procédés pour optimiser la topologie d'un scatternet Bluetooth pour le réseautage social

(30) Priority: 28.09.2006 US 827323 P; 17.05.2007 US 750045; 28.09.2007 KR 20070097650
(43) Date of publication of application: 07.05.2008
(73) Proprietor: Samsung Electronics Co., Ltd., Suwon-si, Gyeonggi-do 442-743 (KR)
(72) Inventor: Niranjan c/o Samsung Electronics Co., Ltd., Gyeonggi-do (KR); Duggi, Mohan Reddy c/o Samsung Electronics Co., Ltd., Gyeonggi-do (KR)
(74) Representative: Grünecker, Kinkeldey, Stockmair & Schwanhäusser

(56) References cited:
- KALIA ET AL: "Scatternet structure and Inter-Piconet communication in the Bluetooth System" IEEE NCC, 2000, pages 1-4, XP000863816
- DHARIA S I ET AL: "A novel distributed resource-aware scalable scheme for Scatternet formation" NETWORKS, 2003. ICON2003. THE 11TH IEEE INTERNATIONAL CONFERENCE ON SEPT. 28-OCT. 1, 2003, PISCATAWAY, NJ, USA,IEEE, 28 September 2003 (2003-09-28), pages 659-664, XP010683578 ISBN: 0-7803-7788-5
- PAMUK C ET AL: "SF-DeviL: Distributed bluetooth scatternet formation algorithm based on device and link characteristics" COMPUTERS AND COMMUNICATION, 2003. (ISCC 2003). PROCEEDINGS. EIGHTH IEEE INTERNATIONAL SYMPOSIUM ON JUNE 30 - JULY 3, 203, PISCATAWAY, NJ, USA,IEEE, 2003, pages 646-651, XP010646091 ISBN: 0-7695-1961-X
- MYEONG-A YANG ET AL: "A Social Group-Aware and Tunnel-Based Scatternet Formation Scheme" PERVASIVE COMPUTING AND COMMUNICATIONS WORKSHOPS, 2007. PERCOM WORKSHOPS '07. FIFTH ANNUAL IEEE INTERNATIONAL CONFERENCE ON, IEEE, PI, March 2007 (2007-03), pages 520-525, XP031070511 ISBN: 0-7695-2788-4
- BIN WANG ET AL: "Supporting persistent social groups in ubiquitous computing environments using context-aware ephemeral group service", PERVASIVE COMPUTING AND COMMUNICATIONS, 2004. PROCEEDINGS OF THE SECON D IEEE ANNUAL CONFERENCE ON MAR. 14-17, 2004, PISCATAWAY, NJ,IEEE, US, 14 March 2004 (2004-03-14), pages 287-296, XP010689691, ISBN: 978-0-7695-2090-2

## Description

The present invention relates to systems and methods for optimizing a topology of a Bluetooth scatternet for social networking.

In communications networks, the topology is usually a schematic description of the arrangement of a network, including its nodes and connecting lines. There are two ways of defining the network geometry: a physical topology and a logical topology. The physical topology of a network is the actual geometric layout of the nodes, while the logical topology refers to the nature of the paths that signals follow from node to node. In many instances, the logical topology is the same as the physical topology.

There are several common physical topologies, including the bus network, the star network, and the ring network. In the bus network topology, every node is connected to a main cable called the bus. Therefore, in effect, each node is directly connected to every other node in the network. In the star network topology, there is a central computer or server to which all the nodes are directly connected. Thus, every node is indirectly connected to every other node through the central computer. In the ring network topology, the nodes are connected in a closed loop configuration. Adjacent pairs of nodes are directly connected. Other pairs of nodes are indirectly connected, the data passing through one or more intermediate nodes.

The common goal for each of these physical configurations is a fully-connected topology, meaning each node is directly or indirectly connected to all other nodes in the network. To achieve a fully-connected topology, connections between nodes are made randomly, or in rare cases, based on the master/slave role of the nodes, rather than the data flow pattern among the nodes. This results in an inefficient communication network for a number of reasons. Nodes having similar profiles, indicating the likelihood of frequent communication with each other, are often connected through paths requiring multiple hops. At the same time, nodes having dissimilar profiles, indicating the improbability of frequent communication with each other, may be directly connected. Moreover, nodes may be connected, either directly or indirectly, where no connection is required because these nodes will never communicate with each other.

KALIA ET AL: "Scattemet structure and Inter-Piconet communication in the Bluetooth System" IEEE NCC, 2000, pages 1-4 relates to the scatternet structure and inter-piconet communication in a Bluetooth system. A large number of mobile devices within a small area communicate by forming ad hoc piconets. In a single piconet model, all Slaves are organized into a single piconet. In order to support more than seven Slaves, by park mode is used. In the scatternet model, Slaves are organized into multiple overlapping piconets. A group of mobile devices which transfer data amongst themselves frequently is called a communicating group CG. Different piconets are formed for different CGs. One way of identifying a CG is to analyze traffic flow patterns. Initially, a single piconet is formed for all the Slaves. By observing the destination addresses in the Slave packets, a Master determines the traffic flow pattern and identifies different CGs. The single piconet then splits into multiple piconets. Over time, the traffic distribution may change.

DHARIA S I ET AL: "A novel distributed resource-aware scalable scheme for Scatternet formation" NETWORKS, 2003. ICON2003. THE 11^{TH} IEEE INTERNATIONAL CONFERENCE ON SEPT. 28-OCT. 1, 2003, PISCATAWAY, NJ, USA, IEEE, 28 September 2003, pages 659-664, ISBN 0-7803-7788-5 describes a resource aware scalable scheme for scatternet formation. When two Bluetooth devices are connected to each other, one of the devices assumes the role of Master and the other becomes a Slave. Each master may connect at most seven active slaves, forming a network referred to as a piconet. A scatternet is a set of connected piconets. It is formed when two or more piconets share a common device, often referred to as a bridge. A distributed two phase scatternet formation algorithm is proposed. The scatternet formation algorithm runs in two phases for each device. In the first phase, devices try to form new piconets or align with existing piconets as bridges. A resource weight is decided for each device depending on its energy, computational power and its mobility. While the resource weight is directly proportional to battery power and computational power, it is inversely proportional to mobility. In the first phase, each device selects a number N inversely proportional to R and executes a procedure to find a Master N times or becomes a Master. If the device remains isolated after N attempts, it designates itself a master with zero Slaves and zero bridges and executes a procedure to find a slave until a timeout occurs. At the end of this phase, each device becomes either a Master or a Slave. In a second phase, each Master executes a procedure to find a bridge Slave or it selects a Slave device to execute a procedure to find a bridge Master to make the selected Slave device a bridge.

PAMUK C ET AL: "SF-DeviL: Distributed bluetooth scatternet formation algorithm based on device and link characteristics" COMPUTERS AND COMMUNICATION, 2003. (ISCC 2003). PROCEEDINGS. EIGHTH IEEE INTERNATIONAL SYMPOSIUM ON JUNE 30 - JULY 3, 2003, PISCATAWAY, NJ, USA, IEEE, 2003, pages 646-651, ISBN: 0-7695-1961-X describes a distributed Bluetooth scatternet formation algorithm based on device and link characteristics. Scatternets can be formed by taking into account the class of the device that the Bluetooth module is embedded onto. The battery capacity and traffic generation rate can be predicted using the class information of the device. A device grade DG is assigned to each class of device. The device battery grade indicates the power capacity of the battery and the traffic generation grade of the device. These grades are predetermined according to the class of the device. Further, a received signal strength grade, which is based on the RSSI, can be used to construct the scatternet in such a way that closer nodes have direct connections.

The intermediate document MYEONG-A YANG ET AL: "A Social Group-Aware and Tunnel-Based Scatternet Formation Scheme" PERVASIVE COMPUTING AND COMMUNICATIONS WORKSHOPS, 2007. PERCOM WORKSHOPS 07. FIFTH ANNUAL IEEE INTERNATIONAL CONFERENCE ON, IEEE, PI, March 2007, pages 520-525, ISBN: 0-7695-2788-4 describes a social group aware and tunnel based scatternet formation scheme. Most scatternet formation schemes form a scatternet by connecting all devices within an area, which does not guarantee the best path for the communicating pairs. A communicating group CG is introduced defined as a group of mobile devices with frequent data transfers amongst themselves. But this scheme does not work well in a pervasive computing environment. The proposed scheme is preformed in two stages, a scatternet formation stage and a scatternet interconnection stage. When there is a need to interconnect two social groups the group leaders initiate an interconnection procedure with the counterpart scatternet's social group identifier.

It is the object of the present invention to improve the configuration of the topology of a wireless network.

This object is solved by the subject matter of the independent claims.

Preferred embodiments are defined in the dependent claims.

According to an embodiment, the method includes determining a user profile of a user of the wireless device. The method also includes determining a relationship of the wireless device to a topology of a wireless network wherein the wireless device is a node, the relationship of the wireless device to the topology of the network based at least in part on the user profile.

According to one embodiment, a method is provided for configuring the topology of a wireless network. The method includes defining profiles for users of wireless devices, and configuring the topology of the wireless network based on the user profiles.

In another embodiment, a computer-readable medium is provided storing instructions that, when executed by a processor, promote performing a method. The method including determining a user profile of a user of a wireless device. The method including using the user profile to determine the relationship of the wireless device to a topology of a wireless network.

These and other features will be more clearly understood from the following detailed description taken in conjunction with the accompanying drawings and claims.

For a more complete understanding of this disclosure, reference is now made to the following brief description, taken in connection with the accompanying drawings and detailed description, wherein like reference numerals represent like parts.

Figure 1 is block diagram of an illustrative Bluetooth scatternet for social networking.

Figure 2 is a block diagram of an illustrative system for optimizing the topology of a Bluetooth scatternet for social networking.

Figure 3 is a logic diagram for an illustrative method of optimizing the topology of a Bluetooth scatternet for social networking.

Figure 4 is a diagram of a wireless communications system including a handset operable for some of the various embodiments of the disclosure.

Figure 5 is a block diagram of a handset operable for some of the various embodiments of the disclosure.

Figure 6 is a diagram of a software environment that may be implemented on a handset operable for some of the various embodiments of the disclosure.

It should be understood at the outset that although illustrative implementations of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

A social networking environment has a data flow pattern, in which two devices having similar user profiles will communicate more often than will any two random devices. Therefore, optimizing the topology of a Bluetooth scatternet for social networking based on the expected data flow pattern between devices in the scatternet provides a topology that offers improved network performance over other topology configurations. Common topologies seek a fully-connected scatternet without consideration of the data flow pattern between devices in the scatternet. These topologies result in inefficient network performance because devices in frequent communication with each other are often connected through multiple hops and unnecessary connections between devices unlikely to communicate are maintained. By contrast, a topology optimized based on the expected data flow pattern between devices in the scatternet provides improved network performance because the number of connections between devices likely to communicate is minimized while, at the same time, there are no direct connections to maintain between devices unlikely to communicate.

To improve the performance of a Bluetooth scatternet for social networking, systems and methods for optimizing the topology of the scatternet are disclosed. Following the disclosed methods, a user profile is defined for the user of each Bluetooth enabled device or node in the scatternet and stored in association with that node. The user profile includes information relating to the user of the node which the user may share in common with users of other nodes in the scatternet, that commonality likely indicating the users will communicate with each other through the nodes. Such information may include age, gender, undergraduate college, church affiliation, if any, types of preferred entertainment, e.g. movies, opera, or the ballet, and the like.

Other information is also stored in association with each node. That information includes the node's Bluetooth media access control (MAC) address, its current role within the piconet where it resides, e.g. master, slave, free, or master-slave, and its piconet information. Piconet information identifies other nodes on the same piconet and their associated roles.

Two indices, the user profile index (UPI), which is the encoding of the user profile, and the matching profile index (MPI), are employed to determine the degree of similarity between user profiles associated with any two nodes, where the higher the degree of similarity, the more likely the users will communicate with each other using the two nodes. Two other indices, the piconet profile index (PPI) and the maximum piconet profile index (MPPI) are employed to position nodes with associated similar user profiles in the same piconet. Lastly, the piconet diff profile index (PDPI) is employed to minimize the number of piconets in the topology.

For each node in the Bluetooth scatternet, these indices are evaluated. Based on the resulting values of these indices, the topology of the scatternet is optimized by directly connecting nodes with similar profiles or including them in the same piconet and by minimizing the number of piconets in the topology.

Systems are disclosed for implementing this methodology. To optimize the Bluetooth scatternet topology using the disclosed methodology, the processor of each node in the scatternet locally executes a tool which may be implemented in software, hardware or processor, for example. For each node, the tool identifies other nodes that share similar user profiles, where similar user profiles indicate the likelihood of data flow, meaning communication, between users of the nodes. When another node with a similar user profile is identified, the tool connects the two nodes or locates them within the same piconet. In order to connect or position nodes in this manner, the tool may sever connections between nodes having dissimilar profiles, relatively speaking. Thus, data flow between nodes with similar profiles is localized within a single piconet, and in some circumstances, solely between the nodes. Moreover, nodes that do not have similar profiles are not connected or are not positioned within the same piconet. The resulting optimized topology improves the Bluetooth scatternet performance because the number of connections between nodes likely to communicate is minimized while, at the same time, there are no direct pathways to maintain between nodes unlikely to communicate.

Before describing the disclosed systems and methods in detail, it is helpful to review some Bluetooth technology basics. Bluetooth wireless technology is a short-range communications technology intended to replace the cables connecting portable and/or fixed devices while maintaining high levels of security. Bluetooth technology has achieved global acceptance such that any Bluetooth enabled device, almost anywhere in the world, can connect to other Bluetooth enabled devices in proximity. Bluetooth enabled electronic devices, including cellular or other telephones, wireless laptops, personal digital assistants (PDAs), and MPEG-1 Audio Layer 3 (MP3) players, fixed devices such as wireless nodes or access points, converted computers and so on connect and communicate wirelessly through short-range, ad hoc networks known as piconets.

A piconet is formed when at least one Bluetooth enabled device connects with at least one other device. However, a piconet cannot support more than eight devices. Within a piconet, each device has a defined role, such as master, slave, and master-slave. A device that is designated "master" controls one or more other devices referred to as "slaves". A device that is designated "free" has no defined role, meaning it is neither a master nor a slave, while a device designated "master-slave" is both. These roles have meaning only within the context of the piconet. Moreover, a piconet may have only one master while all remaining devices within that piconet are slaves or free.

A Bluetooth enabled device may participate concurrently in two or more piconets, although it can never be a master of more than one piconet. It may, however, be a slave in many independent piconets. A Bluetooth enabled device that is a member of two or more piconets is said to be involved in a scatternet.

A scatternet is a group of two or more independent and non-synchronized piconets that share at least one common Bluetooth enabled device. For example, a scatternet may be formed from three independent piconets, all of which share a common Bluetooth enabled wireless laptop. There can be no more than 10 fully loaded piconets in a scatternet.

Within the context of a piconet or scatternet, the devices that make up the piconet or scatternet, whether or not Bluetooth enabled, may also be referred to as nodes. A node, for example, may be any device or system in the network such as a cellular telephone or PDA. Each node in a piconet or scatternet has a unique network address commonly referred to as its Media Access Control (MAC) address.

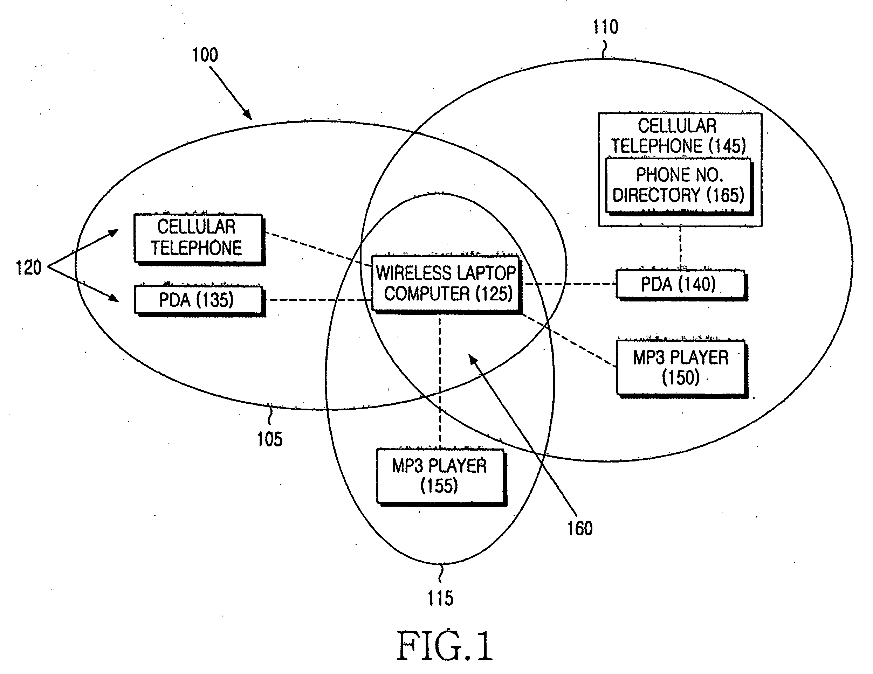

Figure 1 illustrates one representative embodiment of a scatternet 100 comprising three piconets 105, 110, 115. Piconet 105 further comprises three nodes 120, which are a wireless laptop 125, a cellular telephone 130, and a PDA 135. Piconet 110 further comprises four nodes 120, which are a PDA 140, a cellular telephone 145, a MP3 player 150, and the wireless laptop 125. Piconet 115 further comprises two nodes 120, which are the wireless laptop 125 and a MP3 player 155. All nodes in the three piconets 105, 110, 115 are Bluetooth enabled.

In this representative scatternet 100, each piconet 105, 110, 115 shares a common Bluetooth enabled device, specifically the Bluetooth enabled wireless laptop 125. None of the piconets 105, 110, 115 have more than eight devices or nodes 120, and the scatternet 100 comprises no more than 10 fully loaded piconets.

There are also designations of connectivity between nodes 120 in this representative scatternet 100, illustrated by dashed lines 160, to indicate the pathway each node 120 uses to communicate with other nodes 120 in the scatternet 100. These dashed lines 160 represent the topology of the scatternet 100. The efficiency of the scatternet 100, meaning how quickly nodes 120 communicate and exchange data with each other, is affected by this topology. There is a direct connection between wireless laptop 125 and cellular telephone 130, which provides an efficient pathway for communication and data exchange between these two nodes 120.

However, should a user desire, for example, to transfer a copy of a phone number directory 165 stored on cellular telephone 145 to cellular telephone 130, there is no similar direct connection between these two devices. As such, the transfer of the directory 165 occurs indirectly, requiring multiple hops first from the telephone 145 to the PDA 140, then from the PDA 140 to the wireless laptop 125, and finally from the laptop 125 to the telephone 130. If such a transfer is a one time or infrequent occurrence, the efficiency of the scatternet 100 may be negligibly affected by this multi-hop transfer of data. On the other hand, if such a transfer of data occurs more frequently, the efficiency of the scatternet 100 is impacted, as the total time to complete frequent, multiple transfers of data accumulates. At the same time, the multiple hop transfer of data in this manner may affect other communications involving these nodes 145, 140, 125, 130, thereby slowing those communications and further degrading the scatternet 100 efficiency.

As previously described, commonly used network topologies are not based on the data flow pattern within a network. Hence, networks using those topologies are often inefficient, requiring multiple hops for communications between nodes, similar to the phone number directory 165 transfer presented above. Network efficiency may be improved, even optimized, by considering the expected data flow pattern of a network. For instance, the efficiency of scattemet 100 depicted in Figure 1 may be improved by considering how often the phone number directory 165 will likely be transferred from cellular telephone 145 to cellular telephone 130 and modifying the topology, represented by the dashed lines 160, of this scattemet 100 to provide a more direct pathway for this transfer, thereby speeding up the transfer.

The disclosed systems and methods provide a means to optimize the topology of a Bluetooth scatternet based on the expected data flow pattern within the scatternet to provide improved scatternet efficiency. These systems and methods have particular value in scattemets used for social networking. In such network environments, individual social contacts are typically numerous and recurring because of common characteristics shared by the individuals involved. On the other hand, individuals in the social network with little in common typically do not communicate with each other. Based on these observations, the expected data flow pattern in the social network may be predicted as a function of the similarities among users in the network and used to optimize the network. As such, the data flow pattern of the social network need not be monitored. Rather, individual user profiles provide the basis for predicting the likely flow of data within the social network.

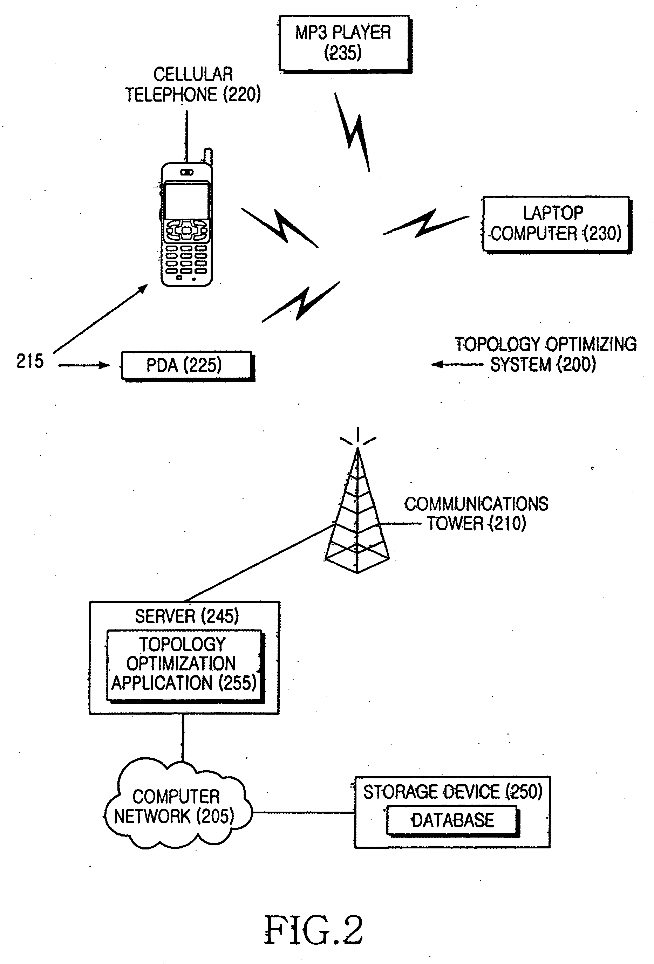

A telecommunications provider or network operator may execute methods for optimizing the topology of a Bluetooth scatternet based on the expected data flow pattern between nodes in the scatternet using the illustrative topology optimizing system 200 depicted in Figure 2. In this embodiment, the system 200 comprises a computer network 205, a communications tower 210, and several Bluetooth enabled communications devices 215, specifically a cellular telephone 220, a PDA 225, a wireless laptop 230, and an MP3 player 235. The computer network 205 further comprises a server 245 and a storage device 250, neither of which are Bluetooth enabled.

A topology optimization application 255 is stored locally on each Bluetooth enabled device 215 but is not shown on the devices 215 in Figure 2. The processor of each device 215 periodically executes the application 255. Moreover, a copy of the topology optimization application 255 might be stored on each device or might also be stored on server 245 and might be accessible through the computer network 205 to a database 260 stored on the storage device 250. The server 245 has access to the Bluetooth enabled devices 215 through the communications tower 210.

Although not depicted, one skilled in the art should readily appreciate that the system 200 may comprise other types of Bluetooth enabled devices 215. Moreover, the system 200 may comprise multiple such devices 215, although only a single PDA 225, cellular telephone 220, wireless laptop 230, and MP3 player 235 are depicted in Figure 2. Similarly, the computer network 205 may comprise other servers, land-line computers and printers.

The topology optimization application 255 is a tool or application that optimizes the topology of a Bluetooth scattemet to improve its efficiency. In the system embodiment depicted in Figure 2, the Bluetooth scatternet is defined by the Bluetooth enabled devices 215. These devices 215 are distributed among two or more piconets that make up the scatternet.

The topology optimization application 255 executes locally on the Bluetooth enabled devices in possession of the customers of the telecommunications provider. As customers in possession of these devices travel, the devices are also mobile, traveling in and out of communication range with other similar devices. When a first device detects another similar device, or a second device, the application 255 on the first device determines whether the second device should be directly connected to the first device or included in the same piconet as the first device by comparing the user profiles associated with the two devices. If the user profiles are determined to be similar, the devices may be directly connected or included in the same piconet, thereby locating the devices 215 on a single Bluetooth scatternet. This allows the devices 215 to communicate directly or more efficiently. On the other hand, if the user profiles are not determined to be similar, no action is taken by the application 255.

Later, as a device 215 in the Bluetooth scatternet travels beyond a range for which Bluetooth enabled communication is possible, the connection between the device and others in the Bluetooth scatternet is severed and the device ceases to be a node within the Bluetooth scatternet. The process of forming a Bluetooth scatternet when Bluetooth enabled devices detect other such devices with similar associated user profiles and severing connections to the scattemet when a device travels outside the range of communication may be constantly changing as customers in possession of such devices travel in and out of proximity to each other, where proximity is defined by the range possible for Bluetooth communication.

The telecommunications provider might store and maintain a primary source of the topology optimizing application 255 on server 245. Data needed to execute the application, if any, is stored in database 260 located on storage device 250 and accessible via the computer network 205. A backup copy of the application 255 may also be stored on storage device 250 for safe-keeping. Periodically and/or when modifications are made to the topology optimizing application 255, the telecommunications provider transmits a copy of the updated application 255 and any data needed to execute the application 255 from the server 245 and storage device 250 to all Bluetooth enabled devices carried by customers of the telecommunications provider, including the Bluetooth enabled devices 215 depicted in Figure 2, using the communication tower 210.

The formation of a Bluetooth scatternet is possible because of the Bluetooth enabled communications capability of the devices 215. There is no need for devices 215 in the Bluetooth scatternet to communicate through the communication tower 210 and/or the server 245 because each device 215 is Bluetooth enabled and locally executes the topology optimizing application 255. The server 245 simply provides the means to store and maintain the primary source of the application 255, while the communications tower 210 provides the means to periodically transmit an updated or modified copy of the application 255 from the server 245, which is not Bluetooth enabled, to Bluetooth enabled devices carried by customers of the telecommunications provider.

The topology optimization application 255 optimizes the topology of a Bluetooth scatternet, including the scatternet comprising devices 215 depicted in Figure 2, using a number of indices calculated as a function of information associated with each Bluetooth enabled device or node 215 in the scattemet. Depending on the values of these indices, nodes with similar user profiles are directly connected or positioned on the same piconet and the number of piconets in the scattemet is minimized to provide an optimized topology for the Bluetooth scatternet. The indices that form the basis of the topology optimization methodology are addressed in the following paragraphs.

For each Bluetooth enabled node 215 in the scatternet, information is stored in association with the node 215. In some embodiments, this information includes the user profile index (UPI) of the node, defined below, the current role of the node 215, e.g. master, slave, master-slave, and free, the MAC address of the node 215, the piconet information of the node 215. The latter is dependent upon the role of the node 215. If the role of node 215 is master, the piconet information for node 215 includes the MAC address, role and UPI of all of its slaves. If that role is slave, the piconet information includes the MAC address, role and UPI of its master and all other slaves located on the same piconet as node 215. If that role is master-slave, the piconet information includes the MAC address, role and UPI for its master, its slaves, and all slaves positioned on the same piconet as node 215.

The user profile includes information related to the user of the node which the user may share in common with users of other nodes in the scatternet, that commonality likely indicating the nodes will communicate with each other. Such information may include surname, age, gender, undergraduate college, types of preferred entertainment, e.g. movies, opera, or the ballet, church affiliation, or any and all information that might be used to determine the likelihood of nodes communicating. The user profile is then encoded. The encoded user profile is the User Profile Index (UPI). Thus, each Bluetooth enabled node 215 in the scatternet has an associated UPI determined as a function of information associated with the node 215 and the user of the node 215. In mathematical terms, UPI(X) represents the UPI of node X.

As stated above, the topology of the Bluetooth scatternet is optimized by directly connecting nodes with similar profiles or positioning nodes with similar profiles on the same piconet. To determine the degree of similarity between any two nodes, a Matching Profile Index (MPI) is defined as a function of the UPI for both nodes. As such, two nodes associated with users having similar profiles, for example, both enjoy the opera, are over 60 years of age, and are alumni of the same university, will have a more compatible MPI than will two nodes associated with users who do not share anything in common. The more compatible the MPI for two nodes, the more likely those nodes are to communicate. In mathematical terms, MPI(X,Y) is a function of the UPI(X) and the UPI(Y) where X and Y are Bluetooth enabled nodes 215 in the scatternet. Whether or not two nodes X and Y have similar profiles depends on the value of the MPI(X,Y).

Other indices forming the basis of the topology optimization methodology are defined as functions of the MPI. The Piconet Profile Index (PPI) is calculated for a node with respect to a piconet. In mathematical terms, the PPI(X,P(Y)) (meaning the PPI of node X with respect to the piconet for which node Y is the master) equals the sum of MPI(X, Z) for all Z where Z is a node on the piconet for which Y is the master.

The Maximum Piconet Profile Index (MPPI) is also calculated for a node with respect to a piconet. In mathematical terms, the MPPI(X,P(Y)) (meaning the MPPI of node X with respect to the piconet for which Y is the master) equals the maximum MPI(X,Z) where Z is a node on the piconet for which Y is the master.

The Piconet Diff Profile Index (PDPI) is a metric used to optimize the scatternet topology by minimizing the number of piconets in the topology. The PDPI measures the difference between any two piconets and is defined as | PPI(X, P(Y)) - PPI(X, P(Z)) |. When the PDPI for a node in a piconet is below a threshold, that node will not be disconnected from the piconet.

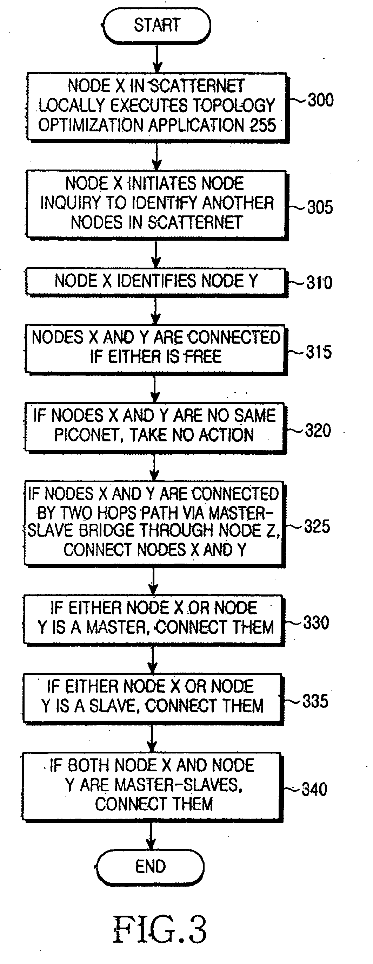

Referring next to Figure 3, a flowchart is provided to illustrate various method embodiments for optimizing the topology of a Bluetooth scatternet, including the representative scatternet comprising the Bluetooth enabled devices 215 depicted in Figure 2. These methods begin when a node, for example, node X, in the scatternet locally executes the topology optimization application 255 (recall Fig. 2) (block 300). As stated previously, a copy of the topology optimization application 255 resides on each node in the scatternet.

Upon execution, the application 255 steps through the algorithm for optimizing the topology of the scatternet, beginning with an inquiry by node X to discover other nodes in the scatternet (block 305). Node inquiry is performed periodically based on parameters, including the inquiry length, defined as the time duration for which the node will be performing the inquiry, the max period length, defined as the maximum time duration between two consecutive inquiries, and the min period length, defined as the minimum time duration between two consecutive inquiries. These parameters are chosen randomly for each node in the scatternet so that the node inquiry of one node will not be synchronized with the node inquiry of another node.

Once another node in the scatternet, for example, node Y, is identified (block 310) and assuming these nodes are not already directly connected, nodes X and Y may be directly connected and an existing connection with a third node may be severed if certain conditions are met.

If either node X or node Y has a role designated as "free", the two nodes are connected (block 315). Also, if node X is the free node, node X is connected to node Y as the slave of node Y. Alternatively, if node Y is the free node, node Y is connected to node X as the slave of node X. This step assures that all nodes in the scatternet have a designated role other than "free", i.e. each node is a master, slave, or master-slave, and are connected to at least one other node.

If nodes X and Y are already positioned on the same piconet, no action is taken and the application 255 continues (block 320).

If node X and node Y are connected by two hops via a master slave bridge through a third node, for example, node Z, the connection between node X and node Z or between node Y and node Z may be severed and nodes X and Y directly connected (block 325). In general, nodes X and Y are connected if they have more similar profiles than do nodes X and Z. Thus, this step optimizes the scatternet topology by directly connecting nodes with similar profiles.

Specifically, if node X is a slave to node Z, node Z is a slave to node Y, and either the MPI(X,Y) is greater than the MPI(X,Z) or the quantity equal to PPI(X,P(Z)) - PPI(X,P(Y)) is less than the PDPI, then node X disconnects from node Z and connects to node Y as the slave of node Y. Alternatively, if node Y is a slave to node Z, node Z is a slave to node X, and either the MPI(X,Y) is greater than the MPI(X,Z) or the quantity equal to PPI(X,P(Z)) - PPI(X,P(Y)) is less than the PDPI, then node Y disconnects from node Z and connects to node X as the slave of node X.

Node X and node Y may be connected if either node, but not both, is a master (block 330). If either node, but not both, is a master, the node which is not the master is connected to the other node as the other node's slave. More plainly stated, if node X is a master and node Y is not, node Y is connected to node X as the slave of node X. Alternatively, if node Y is a master and node X is not, node X is connected to node Y as the slave of node Y. This step also assures a connected topology.

Node X and node Y may be connected if either node, but not both, is a slave (block 335). If node X is a slave and the MPPI(X,P(M(X))) is less than the MPI(X,Y), node X disconnects from its current master, designated as M(X), and connects to node Y as the slave of node Y. Alternatively, if node Y is a slave and the MPPI(Y,P(M(Y))) is less than the MPI(X,Y), node Y disconnects from its current master, M(Y), and connects to node X as the slave of node X. Thus, this step optimizes the scatternet topology by directly connecting nodes with similar profiles.

Node X and node Y may be connected if both are master-slave nodes (block 340). If the MPPI(X,P(M(X))) is less than the MPI(X,Y), node X disconnects from its current master, M(X), and connects to node Y as the slave of node Y. Alternatively, if the MPPI(Y,P(M(Y))) is less than the MPI(X,Y), node Y disconnects from its current master, M(Y), and connects to node X as the slave of node X. Similar to the previous step, this step optimizes the scatternet topology by directly connecting nodes with similar profiles. This step also completes the algorithm executed by the topology optimization application 255.

As stated above, this method begins when the topology optimization application 255 is executed locally on a node within the scatternet, referred to here as node X (recall block 300). Node X then performs an inquiry to identify other nodes within the scatternet (recall 305). The topology of the scatternet is optimized by directly connecting nodes with similar profiles or positioning them on the same piconet while at the same time minimizing the number of piconets in the scattemet (recall blocks 310 through 340). Moreover, the method embodiment is also executed by each node in the scatternet to optimize the topology of the scatternet.

Also as stated above, Figure 3 illustrates various method embodiments for optimizing the topology of a Bluetooth scattemet. One skilled in the art will readily appreciate that the method steps may be performed in a different order to achieve the same result, namely an optimized topology for the scatternet. Thus, other method embodiments comprise these same or perhaps different steps, although the topology optimization application 255 executes them in a different order.

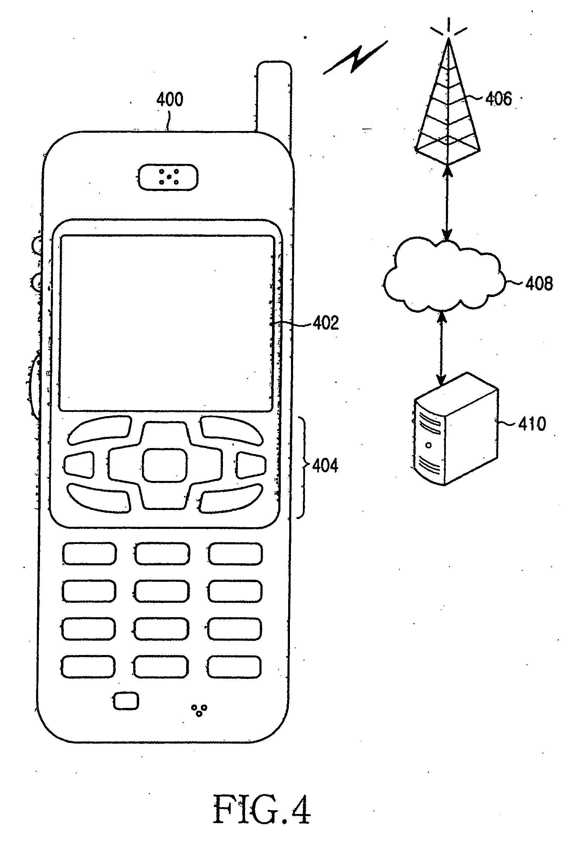

Figure 4 shows a wireless communications system including a handset 400 that may be operable for implementing aspects of the present disclosure, but the present disclosure should not be limited to these implementations. Though illustrated as a mobile phone, the handset 400 may take various forms including a wireless handset, a pager, a personal digital assistant (PDA), a portable computer, a tablet computer, or a laptop computer. Many suitable handsets combine some or all of these functions. In some embodiments of the present disclosure, the handset 400 is not a general purpose computing device like a portable, laptop or tablet computer, but rather is a special-purpose communications device such as a mobile phone, wireless handset, pager, or PDA. The handset 400 might be substantially similar to the nodes 120 of Figure 1.

The handset 400 includes a display 402 and a touch-sensitive surface or keys 404 for input by a user. The handset 400 may present options for the user to select, controls for the user to actuate, and/or cursors or other indicators for the user to direct. The handset 400 may further accept data entry from the user, including numbers to dial or various parameter values for configuring the operation of the handset 400. The handset 400 may further execute one or more software or firmware applications in response to user commands. These applications may configure the handset 400 to perform various customized functions in response to user interaction.

Among the various applications executable by the handset 400 are a web browser, which enables the display 402 to show a web page. The web page is obtained via wireless communications with a cell tower 406, a wireless network access node, or any other wireless communication network or system. The cell tower 406 might be substantially similar to the communications tower 210 of Figure 2. The cell tower 406 (or wireless network access node) is coupled to a wired network 408, such as the Internet, which might be substantially similar to the computer network 205 of Figure 2. Via the wireless link and the wired network, the handset 400 has access to information on various servers, such as a server 410. The server 410 may provide content that may be shown on the display 402. The server 410 might be substantially similar to the server 245 of Figure 2.

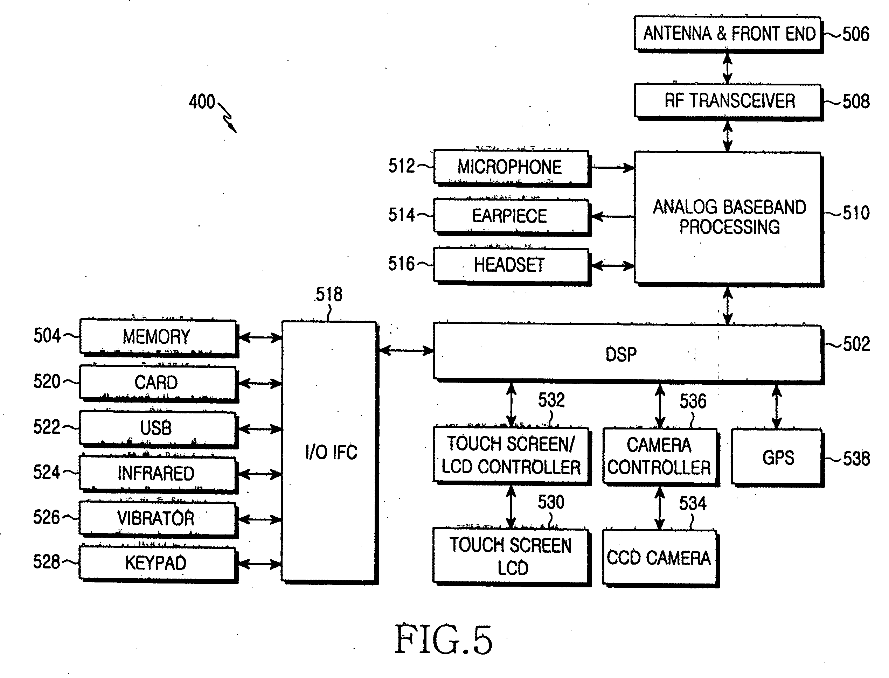

Figure 5 shows a block diagram of the handset 400. The handset 400 includes a digital signal processor (DSP) 502 and a memory 504. As shown, the handset 400 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, an infrared port 524, a vibrator 526, a keypad 528, a touch screen liquid crystal display (LCD) with a touch sensitive surface 530, a touch screen/LCD controller 532, a charge-coupled device (CCD) camera 534, a camera controller 536, and a global positioning system (GPS) sensor 538.

The DSP 502 or some other form of controller or central processing unit operates to control the various components of the handset 400 in accordance with embedded software or firmware stored in memory 504. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the handset 400 to send and receive information from a cellular network or some other available wireless communications network. The RF transceiver 508 provides frequency shifting, converting received RF signals to baseband and converting baseband transmit signals to RF. The analog baseband processing unit 510 may provide channel equalization and signal demodulation to extract information from received signals, may modulate information to create transmit signals, and may provide analog filtering for audio signals. To that end, the analog baseband processing unit 510 may have ports for connecting to the built-in microphone 512 and the earpiece speaker 514 that enable the handset 400 to be used as a cell phone. The analog baseband processing unit 510 may further include a port for connecting to a headset or other hands-free microphone and speaker configuration.

The DSP 502 may send and receive digital communications with a wireless network via the analog baseband processing unit 510. In some embodiments, these digital communications may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the infrared port 524. The USB interface 522 may enable the handset 400 to function as a peripheral device to exchange information with a personal computer or other computer system. The infrared port 524 and other optional ports such as a Bluetooth interface or an IEEE 802.11 compliant wireless interface may enable the handset 400 to communicate wirelessly with other nearby handsets and/or wireless base stations.

The input/output interface 518 may further connect the DSP 502 to the vibrator 526 that, when triggered, causes the handset 400 to vibrate. The vibrator 526 may serve as a mechanism for silently alerting the user to any of various events such as an incoming call, a new text message, and an appointment reminder.

The keypad 528 couples to the DSP 502 via the interface 518 to provide one mechanism for the user to make selections, enter information, and otherwise provide input to the handset 400. Another input mechanism may be the touch screen LCD 530, which may also display text and/or graphics to the user. The touch screen LCD controller 532 couples the DSP 502 to the touch screen LCD 530.

The CCD camera 534 enables the handset 400 to take digital pictures. The DSP 502 communicates with the CCD camera 534 via the camera controller 536. The GPS sensor 538 is coupled to the DSP 502 to decode global positioning system signals, thereby enabling the handset 400 to determine its position. Various other peripherals may also be included to provide additional functions, e.g., radio and television reception.

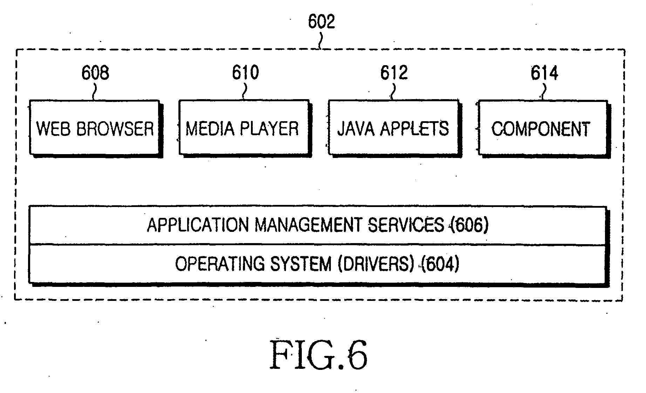

Figure 6 illustrates a software environment 602 that may be implemented by the DSP 502. The DSP 502 executes operating system drivers 604 that provide a platform from which the rest of the software operates. The operating system drivers 604 provide drivers for the handset hardware with standardized interfaces that are accessible to application software. The operating system drivers 604 include application management services ("AMS") 606 that transfer control between applications running on the handset 400. Also shown in Figure 6 are a web browser application 608, a media player application 610, and Java applets 612. The web browser application 608 configures the handset 400 to operate as a web browser, allowing a user to enter information into forms and select links to retrieve and view web pages. The media player application 610 configures the handset 400 to retrieve and play audio or audiovisual media. The Java applets 612 configure the handset 400 to provide games, utilities, and other functionality. A component 614 might provide functionality related to topology optimization in a scatternet.

## Claims

1. A method for configuring the topology of a wireless network, comprising:
defining user profiles for users of wireless devices (215, 220, 225, 230, 235) each user profile includes at least two pieces of information among demographic information about the user, user preferences, and information related to the wireless device;
encoding the user profiles to define a user profile index for each of the one or more users, wherein each wireless device is a node in the wireless network;
associating the user profile index for each of the one or more users with at least one node in the wireless network;
determining a matching profile index between two nodes in the wireless network, the matching profile index being a function of the user profile indices associated with the two nodes;
determining a degree of similarity between the two nodes depending on the matching profile index; and when the matching profile index indicates the two nodes have similar user profiles, configuring the topology to one of:
directly connect the two nodes, and
position the two nodes as part of the same piconet.

2. The method of claim 1, further comprising:
minimizing the number of hops in the wireless network between wireless devices having related user profiles, by at least one of:
directly connecting at least some devices associated with users having similar profiles,
positioning at least some devices associated with users having similar profiles on the same piconet, and
disconnecting at least some devices associated with users who do not have similar profiles.

3. The method of claim 1 or 2, wherein each node in the wireless network stores the user profile index for the user associated with the node, the media access control address of the node, the role of the node, and piconet information.

4. The method of claim 3, wherein piconet information further comprises the role, media access control address, and the user profile index of at least one other node on the same piconet.

5. The method of one of claims 1 and 2, further comprising:
minimizing the number of piconets in the wireless network based on a piconet diff profile index, PDPI, wherein the PDPI measures the difference between two piconets.

6. The method of claim 1, wherein each wireless device is a node in the wireless network, and wherein each node in the wireless network has a role designation, the role designation being one of the group consisting of master, slave, free, and master-slave.

## Patentansprüche

1. Verfahren zum Konfigurieren der Topologie eines Drahtlos-Netzwerks, das umfasst:
Definieren von Benutzer-Profilen für Benutzer von Drahtlos-Geräten (215, 220, 225, 230, 235), wobei jedes Benutzerprofil wenigstens zwei Informations-Elemente von demografischen Informationen über den Benutzer, Benutzer-Präferenzen und Informationen enthält, die sich auf das Drahtlos-Gerät beziehen;
Codieren der Benutzerprofile, um einen Benutzerprofil-Index für jeden von dem einen oder den mehreren Benutzer/n zu definieren, wobei jedes Drahtlos-Gerät ein Knoten in dem Drahtlos-Netzwerk ist;
Verknüpfen des Benutzerprofil-Index für jeden von dem einen oder den mehreren Benutzer/n mit wenigstens einem Knoten in dem Drahtlos-Netzwerk;
Bestimmen eines Übereinstimmungsprofil-Index zwischen zwei Knoten in dem Drahtlos-Netzwerk, wobei der Übereinstimmungsprofil-Index eine Funktion der Benutzerprofil-Indizes ist, die mit den zwei Knoten verknüpft sind;
Bestimmen eines Grades von Ähnlichkeit zwischen zwei Knoten in Abhängigkeit von dem Übereinstimmungsprofil-Index, und
wenn der Übereinstimmungsprofil-Index anzeigt, dass die zwei Knoten ähnliche Benutzerprofile haben, Konfigurieren der Topologie so, dass:
die zwei Knoten direkt verbunden sind, oder
die zwei Knoten als Teil des gleichen Piconet positioniert sind.

2. Verfahren nach Anspruch 1, das des Weiteren umfasst, dass:
die Anzahl von Hops in dem Drahtlos-Netzwerk zwischen Drahtlos-Geräten minimiert wird, die zusammenhängende Benutzerprofile haben, indem:
wenigstens einige Geräte, die mit Benutzern mit ähnlichen Profilen verknüpft sind, direkt verbunden werden,
wenigstens einige Geräte, die mit Benutzern mit ähnlichen Profilen verknüpft sind, in dem gleichen Piconet positioniert werden, oder/und
wenigstens einige Geräte getrennt werden, die mit Benutzern verknüpft sind, die keine ähnlichen Profile haben.

3. Verfahren nach Anspruch 1 oder 2, wobei jeder Knoten in dem Drahtlos-Netzwerk den Benutzerprofil-Index für den mit dem Knoten verknüpften Benutzer, de MAC-Adresse des Knotens, die Rolle des Knotens und Piconet-Informationen speichert.

4. Verfahren nach Anspruch 3, wobei Piconet-Informationen des Weiteren die Rolle, die MAC-Adresse und den Benutzerprofil-Index wenigstens eines anderen Knotens in dem gleichen Piconet umfassen.

5. Verfahren nach einem der Ansprüche 1 und 2, das des Weiteren umfasst:
Minimieren der Anzahl von Piconets in dem Drahtlos-Netzwerk auf Basis eines PDPI (piconet diff profile index), wobei der PDPI die Differenz zwischen zwei Piconets misst.

6. Verfahren nach Anspruch 1, wobei jedes Drahtlos-Gerät ein Knoten in dem Drahtlos-Netzwerk ist, und jeder Knoten in dem Drahtlos-Netzwerk eine Rollen-Bestimmung aufweist und die Rollenbestimmung eine aus der Gruppe ist, die aus Master, Slave, Free und Master-Slave besteht.

## Revendications

1. Procédé de configuration de la topologie d'un réseau sans fil, comprenant :
la définition de profils d'utilisateur pour des utilisateurs de dispositifs sans fil (215, 220, 225, 230, 235) dans lequel chaque profil d'utilisateur comporte au moins deux informations parmi des informations démographiques concernant l'utilisateur, les préférences de l'utilisateur et des informations associées au dispositif sans fil ;
le codage des profils d'utilisateur pour définir un indice de profil d'utilisateur pour chaque utilisateur parmi le ou les utilisateurs, dans lequel chaque dispositif sans fil est un noeud du réseau sans fil ;
l'association de l'indice de profil d'utilisateur pour chaque utilisateur parmi le ou les utilisateurs avec au moins un noeud dans le réseau sans fil ;
la détermination d'un indice de profil d'adaptation entre deux noeuds dans le réseau sans fil, l'indice de profil d'adaptation étant une fonction des indices de profil d'utilisateur associés aux deux noeuds ;
la détermination d'un degré de similitude entre les deux noeuds en fonction de l'indice de profil d'adaptation ; et
lorsque l'indice de profil d'adaptation indique que les deux noeuds ont des profils d'utilisateur similaires
la configuration de la topologie en :
connexion directe des deux noeuds, ou
position des deux noeuds en tant que partie du même picoréseau.

2. Procédé selon la revendication 1, comprenant en outre :
la minimisation du nombre de sauts dans le réseau sans fil entre des dispositifs sans fil ayant des profils d'utilisateurs associés, par au moins une action parmi :
la connexion directe d'au moins certains dispositifs associés à des utilisateurs ayant des profils similaires,
le positionnement d'au moins certains dispositifs associés à des utilisateurs ayant des profils similaires sur le même picoréseau, et
la déconnexion d'au moins certains dispositifs associés à des utilisateurs n'ayant pas des profils similaires.

3. Procédé selon la revendication 1 ou 2, dans lequel chaque noeud du réseau sans fil contient l'indice de profil d'utilisateur pour l'utilisateur associé au noeud, l'adresse de contrôle d'accès au support du noeud, le rôle du noeud et les informations du picoréseau.

4. Procédé selon la revendication 3, dans lequel les informations de picoréseau comprennent en outre le rôle, l'adresse de contrôle d'accès au support et l'indice de profil d'utilisateur d'au moins un autre noeud du même picoréseau.

5. Procédé selon l'une des revendications 1 et 2, comprenant en outre :
la minimisation du nombre de picoréseaux dans le réseau sans fil en se basant sur un indice de profil de différence de picoréseau, PDPI, dans lequel le PDPI mesure la différence entre deux picoréseaux.

6. Procédé selon la revendication 1, dans lequel chaque dispositif sans fil est un noeud du réseau sans fil et dans lequel chaque noeud du réseau sans fil possède une désignation de rôle, la désignation de rôle étant choisie dans le groupe constitué de maître, esclave, libre et maître-esclave.
